# EUROPÄISCHE PATENTSCHRIFT

(11) **EP 3 184 285 B1**
(45) Veröffentlichungstag und Bekanntmachung des Hinweises auf die Patenterteilung: **08.04.2020**
(21) Anmeldenummer: 16204871.4
(22) Anmeldetag: 16.12.2016
(51) Int. Cl.: B29C 65/48, B29C 65/82, B64F 5/60, G01M 3/22, B29C 65/52

(54) **BAUTEILVORRICHTUNG UND VERFAHREN ZUM DETEKTIEREN EINES SCHADENS EINER VERKLEBUNG BEI EINER BAUTEILVORRICHTUNG**
COMPONENT DEVICE AND METHOD FOR DETECTING DAMAGE TO A BONDED JOINT IN A COMPONENT DEVICE
DISPOSITIF ET PROCÉDÉ DE DÉTECTION DE DOMMAGE AU NIVEAU D'UNE LIAISON COLLÉE D'UN DISPOSITIF

(30) Priorität: 22.12.2015 DE 102015122592
(43) Veröffentlichungstag der Anmeldung: 28.06.2017
(73) Patentinhaber: Airbus Defence and Space GmbH, 82024 Taufkirchen (DE)
(72) Erfinder: KRUSE, Thomas, 21129 Hamburg (DE); KÖRWIEN, Thomas, 85635 Höhenkirchen (DE); FRIEDBERGER, Alois, 85667 Oberpframmern (DE); HELWIG, Andreas, 80469 München (DE)
(74) Vertreter: LKGLOBAL Lorenz & Kopf PartG mbB Patentanwälte

(56) Entgegenhaltungen:
- DE-A1- 1 934 798
- JP-A- H0 524 116

## Beschreibung

Die Erfindung betrifft eine Bauteilvorrichtung, insbesondere für ein primäres Stützteil eines Luftfahrzeugs, welches ein erstes Bauelement, ein zweites Bauelement und eine Verklebung umfasst, die eine Verbindung zwischen dem ersten Bauteilelement und dem zweiten Bauteilelement bereitstellt. Die Erfindung betrifft ferner ein Verfahren zum Detektieren eines Schadens einer Verklebung einer Bauteilvorrichtung.

Adhäsive Bindungen für Composite-Bauteile sind gegenwärtig nicht zertifiziert für die Verwendung als alleiniges Füge-Element in primären Stützbauteilen eines Luftfahrzeugs. Der Hauptgrund dafür ist, dass die adhäsive Bindung stark von Herstellungsparametern wie Verunreinigungen oder Oberflächenpräparation abhängen. All diese Einflussparameter können zu einer geschwächten Bindung oder zur Entbinderung der adhäsiven Bindung führen. Um dies zu vermeiden, wird momentan versucht, die Ausbreitung von Rissen zu verhindern. Alternativ wird versucht, das Wachstum der Risse zu verringern.

Da sekundäre adhäsive Bindungen in Composite-Bauteilen für primäre Stützbauteile verwendet werden sollen, ist es günstig, wenn potentielle Schäden (Entbinderung) innerhalb von wenigen Flugzyklen oder im Zuge von regulären Wartungsarbeiten von Personen ohne spezielle Kenntnisse aufgefunden werden können. In allen Überwachungen des Zustands von Strukturen (structural health monitoring) ist es bislang notwendig, Sensoren in den verschiedenen Verbindungen vorzusehen. Dies führt zu komplizierten Architekturen, so dass die Vorteile von Composite-Verbindungen, nämlich deren Leichtgewichtigkeit, Kostengünstigkeit und Dauerhaftigkeit, verringert werden.

Beispielsweise offenbart EP 2 431 156 A1 die Verwendung von magnetostriktiven Teilchen in der zu überwachenden Verbindung, wobei durch Schäden in der Verbindung verursachte Spannungen in den magnetostriktiven Teilchen durch einen externen Sensor detektiert werden können.

WO 2012/141779 A1 offenbart eine Verbindung, in der ein Gewebe und elektrisches Netzwerk mit Sensoren eingearbeitet sind, welche zur Überwachung des Zustands der Verbindung dienen.

Die DE 19 34 798 A1 bezieht sich auf eine Verpackungsvorrichtung und auf ein Verfahren zum Ausbilden von dichten Verpackungen und betrifft insbesondere eine Vorrichtung und ein Verfahren zum automatisierten Verpacken von Gegenständen in einzelnen Packungen zwischen heißversiegelbaren Flachmaterialbahnen, wobei die so hergestellten Packungen auf Leckstellen durch Einführen eines Schutzgases in das Packungsinnere und durch automatisches Prüfen des Austritts dieses Schutzgases aus den Packungen kontrolliert werden.

Die JP H05 24116 A beschäftigt sich mit einem Verfahren zum Detektieren eines Defekts in einem Verbindungsbereich von Wasserbarriereschichten. Hierbei wird in dem Verbindungsbereich ein Hohlraum durch Einfügen eines Verbindungsmaterials und eines Hilfsmaterials zwischen den Wasserbarriereschichten gebildet. Durch eine Nadel wird in den Hohlraum Rauch injiziert und dabei visuell auf Stellen geprüft, an denen der Rauch aus dem Verbindungsbereich austritt.

Es ist Aufgabe der vorliegenden Erfindung, eine vereinfachte Zustandsüberwachung für adhäsive Verbindungen bereitzustellen.

Diese Aufgabe wird durch die Bauteilvorrichtung nach Anspruch 1 und das Verfahren nach Anspruch 10 gelöst.

Die abhängigen Ansprüche beschreiben bevorzugt die Ausführungsformen der Erfindung.

Die Erfindung betrifft eine Bauteilvorrichtung, insbesondere für ein primäres Stützbauteil eines Luftfahrzeugs, welche ein erstes Bauteilelement, ein zweites Bauteilelement und eine Verklebung umfasst. Die Verklebung stellt eine Verbindung zwischen dem ersten Bauteilelement und dem zweiten Bauteilelement bereit. Ferner umfasst die Bauteilvorrichtung eine Markersubstanzeinrichtung, welche ausgebildet ist, bei Kontakt mit Umgebungsluft ein flüchtiges Markergas an die Umgebung abzugeben, und welche bei einer unzerstörten Verklebung durch die Verklebung, das erste Bauteilelement und/oder das zweite Bauteilelement hermetisch von der Umgebungsluft abgeschlossen ist. Darüber hinaus ist der Bauteilvorrichtung eine Detektoreinrichtung zugeordnet, welche ausgebildet ist, das von der Markersubstanzeinrichtung abgegebene Markergas zu detektieren.

Die Bauteilvorrichtung kann ein geklebter Verbund aus Bauteilen oder Bauteilelementen sein. Die Bauteilvorrichtung kann neben dem ersten Bauteilelement und dem zweiten Bauteilelement noch weitere Bauteilelemente aufweisen, die in einer zweiten, dritten oder weiteren Verklebung miteinander verbunden sind. Vorzugsweise ist jede der Verklebungen der Bauteilvorrichtung mit einer Markersubstanzeinrichtung versehen.

Das erste Bauteilelement weist vorzugsweise eine erste Kontaktfläche auf, während das zweite Bauteilelement insbesondere eine zweite Kontaktfläche aufweist. Die Verklebung ist bevorzugt zwischen der ersten Kontaktfläche und der zweiten Kontaktfläche vorgesehen. Die Verklebung stellt bevorzugt eine (sekundäre) adhäsive Verbindung zwischen den Bauteilen her. Die Verklebung kann auch als "bonding" bezeichnet werden und umfasst die aus dem Stand der Technik bekannten Materialien. Die Verklebung steht insbesondere an einer ihrer Außenflächen, vorzugsweise eine Seitenfläche, mit der Umgebungsluft in Fluidverbindung. Bevorzugt ist die Umgebungsluft direkt mit der Verklebung in Kontakt.

Das zweite Bauteilelement kann beispielsweise ein Teil einer Außenhaut eines Luftfahrzeugs sein. Das erste Bauteilelement kann ein Stringer (Pfette) eines Luftfahrzeugs sein. Das erste Bauteilelement ist beispielsweise Winkelprofil zur zusätzlichen, örtlich begrenzten Aussteifung von des zweiten Bauteilelements, wie beispielsweise Rumpf-Blechfedern. Das zweite Bauteilelement ist vorzugsweise plattenförmig ausgebildet. Durch die Verklebung kann eine sekundäre adhäsive Verbindung zwischen dem ersten Bauteilelement und dem zweiten Bauteilelement hergestellt werden, insbesondere zwischen der ersten Kontaktfläche und der zweiten Kontaktfläche.

Folgende Materialkombinationen können für das erste Bauteilelement und das zweite Bauteilelement vorgesehen sein:
- ein ausgehärtetes Composite-Bauteil mit einem anderen ausgehärteten Composite-Bauteil,
- ein ausgehärtetes Composite-Bauteil mit einem unausgehärteten Composite-Bauteil (mit oder ohne zusätzlicher Verklebung, wobei die Verklebung durch das Härten des bislang unausgehärteten Composite-Bauteils zustande kommt),
- ein gehärtetes Composite-Bauteil mit einem metallischen Bauteil,
- ein gehärtetes Composite-Bauteil mit einem Fasermetalllaminatbauteil,
- ein gehärtetes Composite-Bauteil mit einem teilweise gehärteten Composite-Bauteil (mit oder ohne zusätzlicher Verklebung),
- ein teilweise gehärtetes Composite-Bauteil mit einem anderen teilweise gehärteten Composite-Bauteil (mit oder ohne zusätzlicher Verklebung) und
- jede Materialkombination, bei der wenigstens ein Bauteil ein Harz, vorzugsweise ein Cyanatesterharz, umfasst.

Das erste Bauteil und das zweite Bauteil, insbesondere die erste Kontaktfläche und die zweite Kontaktfläche, werden vorzugsweise zur Aufbringung der Verklebung nach einem der folgenden Prinzipien vorbehandelt:
- globale Applikation eines chemischen Ätzbades
- lokale Applikation durch Sprayen
- lokale Applikation durch Vakuumaufbringung
- lokale Applikation auf dem Trägermaterial (inklusive Schutz gegen Verschmutzungen beim Transport)
- lokale Applikation durch einen Beschichtungsprozess durch eine Bürste und
- jedes andere definierte Standardapplikationsverfahren für Flüssigkeiten.

Vorzugsweise werden die erste und/oder die zweite Kontaktfläche einer Laserbehandlung und/oder einer Plasmabehandlung zur Vorbehandlung unterzogen.

Die Verklebung vom ersten Bauteil und zweiten Bauteil kann manuell oder in einem automatisierten Prozess erfolgen. Die Aktivierung der Oberflächenbehandlung ist vorzugsweise ein Jahr stabil, was dem Hersteller die Möglichkeit gibt, das Herstellen von Bindungen oder Werkzeugkonzepte bereitzustellen, mit denen ein wiederholbarer Verbindungsprozess ohne Zeitbehinderungen möglich ist.

Die Markersubstanzeinrichtung wird vorzugsweise gleichzeitig mit dem Aufbringen der Verklebung in die Bauteilvorrichtung eingebracht. Das Einbringen der Markersubstanzeinrichtung in die Bauteilvorrichtung erfolgt insbesondere derart, dass die Markersubstanzeinrichtung hermetisch von der Umgebungsluft abgeschlossen ist, wenn die Verklebung intakt ist. Beim Ausbreiten eines Risses in der Verklebung oder beim Entbindern der Verklebung gerät die Markersubstanzeinrichtung vorzugsweise in Kontakt mit der Umgebungsluft. Die Markersubstanzeinrichtung gibt dann das Markergas an die Umgebungsluft ab, da das Markergas flüchtig ist. Als Folge steigt die Konzentration des Markergases in der Umgebungsluft. Die Umgebungsluft ist insbesondere das Gas oder die Kombination von Gasen, welche die Bauteilvorrichtung umgibt. Beispielsweise ist die Umgebungsluft die Raumluft in einem Luftfahrzeug.

Die hermetische Abgrenzung der Markersubstanzeinrichtung von der Umgebungsluft erfolgt insbesondere dadurch, dass diese gasdicht ist, so dass kein Gas der Umgebungsluft zu der Markersubstanzeinrichtung vordringen kann. Dazu ist die Markersubstanzeinrichtung beispielsweise vollständig von der Verklebung umgeben, welche insbesondere aus einem gasdichten Material besteht. Alternativ kann die Markersubstanzeinrichtung zwischen der Verklebung und dem ersten Bauteilelement, zwischen der Verklebung und dem zweiten Bauteilelement, zwischen der Verklebung, dem ersten Bauteilelement sowie dem zweiten Bauteilelement, oder zwischen dem ersten Bauteil und dem zweiten Bauteil vorgesehen sein. Insbesondere sind das Material des ersten Bauteilelements und das Material des zweiten Bauteilelements ebenfalls gasdicht, so dass die Markersubstanzeinrichtung von der Verklebung, dem ersten oder zweiten Bauteil gasdicht eingeschlossen werden kann.

Die Detektoreinrichtung kann an dem ersten Bauteilelement und/oder an dem zweiten Bauteilelement vorgesehen sein. Es ist jedoch auch möglich, dass die Detektoreinrichtung von dem ersten Bauteilelement und dem zweiten Bauteilelement beabstandet angeordnet ist. Beispielsweise ist die Detektoreinrichtung in einem Raum befestigt, in welchem das erste Bauteilelement und das zweite Bauteilelement vorgesehen sind.

Die Detektoreinrichtung ist insbesondere mit einer Steuerungseinrichtung verbunden, welche ausgebildet ist, die von der Detektoreinrichtung detektierten Ergebnisse auszuwerten. Beispielsweise umfasst die Steuerungseinrichtung einen Mikroprozessor oder ist mit einem Computersystem, insbesondere des Luftfahrzeugs, verbunden. Die Steuerungseinrichtung ist vorzugsweise ausgebildet, eine Mitteilung oder einen Alarm auszugeben, wenn die Detektoreinrichtung detektiert, dass das von der Markersubstanzeinrichtung abgegebene Markergas über einer gewissen Konzentration liegt.

Das Markergas kann Gas sein, das in der Umgebungsluft nicht vorkommt, so dass die Detektion dieses Gases durch die Detektoreinrichtung auf einen Schaden in der Verklebung hindeutet. Alternativ oder zusätzlich kann das Markergas ein Gas sein, das auch in der Umgebungsluft vorkommt, wie beispielsweise Sauerstoff, Stickstoff oder Argon. Die Erhöhung der Gaskonzentration in der Umgebungsluft deutet dann auf einen Schaden in der Verklebung hin. Das Markergas ist insbesondere flüchtig, so dass es sich in der die Bauteilvorrichtung umgebenden Umgebung ausbreitet, sobald es von der Markersubstanzeinrichtung freigegeben wird. Das Markergas kann beispielsweise die Verordnung (EG) Nr. 1907/206 (REACH-Verordnung) erfüllen, ist jedoch nicht darauf beschränkt.

Vorteil der Erfindung ist, dass nur ein Detektor oder wenige Detektoren der Detektoreinrichtung vorgesehen werden müssen, um mehrere Verbindungen zu überwachen. Beispielsweise wird in einem Raum nur ein Detektor der Detektoreinrichtung vorgesehen, welche mehrere Bauteilvorrichtungen umfasst. Darüber hinaus muss die Detektoreinrichtung nicht direkt an dem ersten Bauteil und/oder an dem zweiten Bauteil vorgesehen sein, um den Zustand der Verklebung zu überwachen. Somit beeinflusst das Vorsehen der Detektoreinrichtung nicht das Gewicht oder die Form des ersten Bauteilelements und des zweiten Bauteilelements. Die Markersubstanzeinrichtung ist insbesondere hinsichtlich des Gewichts und/oder der Festigkeit der Verklebung vernachlässigbar.

Es ist bevorzugt, dass die Markersubstanzeinrichtung wenigstens ein Vesikel umfasst, das mit dem Markergas und/oder mit einer Flüssigkeit aus kondensiertem Markergas gefüllt ist.

Vorzugsweise wird eine Vielzahl von Vesikeln in die Verklebung eingebracht. Das Vesikel weist insbesondere eine runde Form auf und hat eine Größe im µm- oder mm-Bereich. Das Vesikel ist mit dem Markergas und/oder mit einer Flüssigkeit aus kondensiertem Markergas gefüllt, so dass das Markergas in dem Vesikel eingeschlossen ist. Dies erleichtert das Einbringen des Markergases in die Verklebung, da das Vesikel, insbesondere eine Vielzahl von Vesikeln, mit der unausgehärteten Verklebung vermischt werden und auf das erste Bauteil und das zweite Bauteil aufgebracht werden. Das Markergas kann Anisol (Methylphenylether) oder Spurenstoffe von Belüftungsanlagen umfassen.

Insbesondere wird die Mischung aus Vesikeln und unausgehärteter Verklebung in einen zentralen Bereich des Bauteils angeordnet, so dass die Vesikel beabstandet von einem mit der Umgebungsluft in Kontakt tretenden Rand der Verklebung angeordnet sind. Insbesondere ist bei der Bauteilvorrichtung ein Bereich der Verklebung, der mit der Umgebungsluft in Kontakt steht, nicht mit Vesikeln versehen. Beispielsweise wird das Vesikel an einem Ort der Verklebung angebracht, der bei Belastungen der Bauteilvorrichtung nur geringen Spannungen ausgesetzt ist, und dadurch auch die Verformungen an dem ersten Bauteilelement, dem zweiten Bauteilelement und der Verklebung verringert sind.

Vorzugsweise ist eine Vielzahl von Vesikeln in die Verklebung eingebracht. Die Vesikel können eine für das Markergas durchlässige Hülle haben, so dass, wenn die Vesikel mit der Umgebungsluft in Kontakt treten, das Markergas an die Umgebungsluft abgegeben wird.

Es ist bevorzugt, dass die Markersubstanzeinrichtung wenigstens ein Vesikel umfasst, das mit einem Reaktionsgas und/oder mit einer Flüssigkeit aus kondensiertem Reaktionsgas gefüllt ist, wobei das Reaktionsgas in Kontakt mit der Umgebungsluft, insbesondere mit Sauerstoff, unter Generierung des Markergases chemisch reagiert. Das Reaktionsgas kann Propylalkohol oder ein Aldehyd umfassen.

In einer anderen Ausführungsform ist das Vesikel mit einem Reaktorgas oder mit einem Kondensat des Reaktorgases gefüllt. Für diese Vesikel gelten die oben angestellten Überlegungen ebenfalls. Das Reaktorgas reagiert mit der Umgebungsluft, insbesondere mit dem darin enthaltenen Sauerstoff, unter Generierung des Markergases.

Es ist bevorzugt, dass das Vesikel eine Hülle aufweist, welche bei Kontakt mit der Umgebungsluft und/oder durch Krafteinwirkung zerstörbar ist.

Die Hülle kann beispielsweise aus einem Material hergestellt sein, welches in Kontakt mit der Umgebungsluft, insbesondere mit Sauerstoff, degeneriert, so dass das Markergas freigesetzt wird. Dazu kann die Hülle des Vesikels im unzerstörten Zustand gasdicht für das Markergas sein, was die Herstellung und die Vermischung der Vesikel mit der noch nicht ausgehärteten Verklebung erleichtert.

Alternativ ist die Hülle des Vesikels aus einem Material hergestellt, das leicht zerstörbar ist, so dass bei Beschädigungen an oder in der Verklebung das Vesikel zerstört wird. Dazu kann die Hülle des Vesikels derart ausgestaltet sein, dass sie eine starke Verbindung mit der Verklebung eingeht, so dass Risse oder Verschiebungen in der Verbindung zuverlässig zu Zerstörungen an dem Vesikel führen.

Die Hülle des Vesikels umgibt insbesondere den Inhalt des Vesikels, das gasförmige oder kondensierte Marker- und/oder Reaktionsgas.

Es ist bevorzugt, dass die Markersubstanzeinrichtung Markermaterial umfasst, welches durch die Verklebung, das erste Bauelement und/oder das zweite Bauelement hermetisch von der Umgebungsluft getrennt ist.

In dieser Ausführungsform, welche alternativ oder zusätzlich zu den Vesikeln verwendet werden kann, ist das Markermaterial nicht von einer zusätzlichen Komponente, wie beispielsweise das Vesikel, eingeschlossen, sondern unmittelbar durch die Verklebung, das erste Bauelement und/oder das zweite Bauelement. Beispielsweise ist das Markermaterial in der Mitte der ersten Kontaktfläche und der zweiten Kontaktfläche vorgesehen, so dass ohne die Verklebung ein Seitenrand des Markermaterials der Umgebungsluft ausgesetzt wäre. Dieser Seitenrand wird durch die Verklebung verschlossen, so dass die Verklebung, das erste Bauteilelement und das zweite Bauteilelement zusammen das Markermaterial umschließen.

Dazu sind die Verklebungen, das erste Bauteilelement und das zweite Bauteilelement aus einem gasdichten Material hergestellt. Alternativ kann die erste Kontaktfläche und/oder die zweite Kontaktfläche mit einer gasdichten Schicht überzogen werden.

Durch eine Beschädigung in der Verklebung, wie beispielsweise ein Riss, wird eine Gasverbindung zwischen dem Markermaterial und der Umgebungsluft hergestellt, wodurch das Markergas austreten kann.

Vorteil des Markermaterials ist, dass es genau an einer vorgesehenen Stelle in der Verklebung platziert werden kann. Beispielsweise wird das Markermaterial an einem Ort der Verklebung angebracht, der bei Belastungen der Bauteilvorrichtung nur geringen Spannungen ausgesetzt ist, und dadurch auch die Verformungen an dem ersten Bauteilelement, dem zweiten Bauteilelement und der Verklebung verringert sind.

Es ist bevorzugt, dass das Markermaterial das Markergas, eine Flüssigkeit aus kondensiertem Markergas, ein Reaktionsfeststoff, welcher bei Kontakt mit Umgebungsluft unter Generierung des Markergases chemisch reagiert, eine Reaktionsflüssigkeit, welche bei Kontakt mit Umgebungsluft unter Generierung des Markergases chemisch reagiert, und/oder ein Reaktionsgas, welches bei Kontakt mit Umgebungsluft unter Generierung des Markergases chemisch reagiert, umfasst.

Grundsätzlich ist es möglich, die verschiedensten Materialien und Zustände von Materialien als Markermaterial zu verwenden, solange es möglich ist, das Markermaterial gasdicht einzuschließen. Dazu kann beispielsweise ein Hohlraum in der Verklebung vorgesehen werden, der nachträglich mit dem Markermaterial gefüllt wird, ehe der Zugang verschlossen wird. Allerdings ist es bevorzugt, das Markermaterial gleichzeitig mit der Verklebung aufzubringen.

Hinsichtlich der Materialien, welche in Kontakt mit der Umgebungsluft unter Generierung des Markergases chemisch reagieren, gelten die oben angestellten Überlegungen und Vorteile analog. Das Reaktionsgas, die Reaktionsflüssigkeit und der Reaktionsfeststoff kann als erstes Reaktionsmaterial zusammengefasst werden. Das Markermaterial kann Propylalkohol oder ein Aldehyd umfassen.

Es ist bevorzugt, dass die Verklebung mit der Umgebungsluft über eine Außenfläche in Verbindung steht, wobei entlang der Außenfläche ein Reagenzmaterial vorgesehen ist, wobei das Markermaterial und/oder das Vesikel ein zweites Reaktionsmaterial umfasst, das bei Kontakt mit der Umgebungsluft ein Zwischengas freisetzt, welches chemisch mit dem Reagenzmaterial unter Generierung des Markergases reagiert.

Das Reagenzmaterial ist vorzugsweise vollständig entlang der Außenfläche vorgesehen. Es ist jedoch auch möglich, dass das Reagenzmaterial abschnittsweise entlang der Außenfläche vorgesehen ist. Insbesondere ist das Reagenzmaterial zu der Außenfläche beabstandet, so dass Umgebungsluft an die Außenfläche gelangen kann. Der Abstand zwischen Außenfläche und Reagenzmaterial ist jedoch vorzugsweise gering, so dass aus der Verklebung austretendes Zwischengas mit dem Reagenzmaterial in Berührung kommt.

Das zweite Reaktionsmaterial reagiert bei Kontakt mit der Umgebungsluft, insbesondere mit Sauerstoff, zu dem Zwischengas, welches chemisch mit dem Reagenzmaterial reagiert und dabei das Markergas freisetzt. Dabei sind das Zwischengas und das Reagenzgas vorzugsweise derart gewählt, dass bei der Reaktion von Zwischengas mit Reagenzmaterial das Volumen des generierten Markergases größer als das Volumen des Zwischengases ist. Auf diese Weise lässt sich besonders viel Markergas erzeugen, so dass sich auch kleine Beschädigungen oder Risse in der Verklebung feststellen lassen, aus denen nur wenig Zwischengas entweichen kann.

Es ist bevorzugt, dass die Detektoreinrichtung wenigstens zwei Gasdetektoren umfasst, welche jeweils ausgebildet sind, das Markergas zu detektieren, wobei vorzugsweise die Gasdetektoren jeweils ausgebildet sind, eine Bewegungsrichtung der Umgebungsluft zu messen.

Das Vorsehen von zwei oder mehr Gasdetektoren eröffnet die Möglichkeit, die Position der Beschädigung in der Verklebung zu bestimmen. Je nachdem, in welcher zeitlichen Abfolge das Markergas von den Gasdetektoren detektiert wird oder die Konzentration des Markergases an den jeweiligen Gasdetektoren unterschiedlich ist, lassen sich Rückschlüsse auf die Position der Beschädigung in der Verklebung anstellen.

Der Gasdetektor kann eine elektrischen Nase oder ein Halbleiter-Sensor sein. Die Gasdetektoren können unterschiedliche oder gleiche Bauart aufweisen.

In einer bevorzugten Ausführungsform sind die Gasdetektoren ferner ausgebildet, die Bewegungsrichtung der Umgebungsluft zu messen. Dies kann vor allem in Verbindung mit dem Vorsehen von mehreren Gasdetektoren, welche diese Eigenschaft aufweisen, die Lokalisierung einer Beschädigung in der Verklebung erhöhen. Dazu können die Gasdetektoren mit einer Gasfließgeschwindigkeitsmesseinrichtung ausgestattet sein, welche die Geschwindigkeit des an den Gasdetektoren vorbeiströmenden Gases messen können. Es ist bevorzugt, dass die Detektoreinrichtung einen Flüssigkeitsdetektor aufweist, welcher ausgebildet ist, das kondensierte Markergas zu detektieren.

Wenn die Bauteilvorrichtung in Räumen angeordnet ist, die sehr kalt sind oder deren Wände sehr kalt sind, besteht die Möglichkeit, dass das Markergas kondensiert. Dies trifft vor allem dann zu, wenn das Markergas einen Kondensationspunkt hat, der knapp oberhalb oder unterhalb der Temperatur des Raumes ist. Durch die Kondensation erhöht sich die Konzentration des Markergases, so dass auch sehr geringe Konzentrationen des Markergases in der Luft gemessen werden können. Dies trifft vor allem dann zu, wenn Markergas nur in sehr geringem Maße freigesetzt wird, und die Kondensation des Markergases zu einer zeitlichen Akkumulation der Konzentration des Markergases führt.

Dieser Flüssigkeitsdetektor kann beispielsweise unter einer Auffangeinrichtung, wie beispielsweise einem Trichter, angeordnet sein, so dass möglichst viel kondensiertes Markergas zu dem Flüssigkeitsdetektor gelangt. Der Flüssigkeitsdetektor kann beispielsweise an einer kalten Wand oder an einer abgekühlten Stelle des ersten und/oder zweiten Bauteilelements vorgesehen sein.

In einer weiteren Ausführungsform kann der Flüssigkeitsdetektor in vorhandene Drainageelemente des Luftfahrzeugs integriert sein kann.

Die Erfindung betrifft ferner ein Luftfahrzeug, welche die oben beschriebene Bauteilvorrichtung umfasst.

Das Luftfahrzeug kann jedes Fahrzeug sein, dem es möglich ist, über einen gewissen Zeitraum in der Luft zu verweilen.

Ferner betrifft die Erfindung ein Verfahren zum Detektieren eines Schadens einer Verklebung bei einer Bauteilvorrichtung, insbesondere für ein primäres Stützbauteil eines Luftfahrzeugs. Das Verfahren umfasst die Schritte hermetisches Abschließen einer Markersubstanzeinrichtung von der Umgebungsluft durch die Verklebung, ein erstes Bauteilelement der Bauteilvorrichtung und/oder ein zweites Bauteilelement der Bauteilvorrichtung, wobei die Markersubstanzeinrichtung bei Kontakt mit Umgebungsluft ein flüchtiges Markergas an die Umgebung abgibt. Ferner umfasst das Verfahren die Schritte Detektieren des Markergases in der Umgebungsluft und Bestimmen eines Schadens, wenn die Konzentration des Markergases in der Umgebungsluft über einem vorgegebenen Grenzwert liegt.

Hinsichtlich dieses Verfahrens finden die in Zusammenhang mit der Bauteilvorrichtung angestellten Überlegungen, Weiterbildungen, bevorzugte Ausführungsformen und Vorteile entsprechend Anwendung. Insbesondere wird das Verfahren bei der oben dargestellten Bauteilvorrichtung durchgeführt.

Das hermetische Abschließen der Markersubstanzeinrichtung erfolgt insbesondere bei der Herstellung der Bauteilvorrichtung und dabei vorzugsweise beim Vorsehen der Verklebung zwischen dem ersten Bauteilelement und dem zweiten Bauteilelement.

Die Bestimmung eines Schadens in der Verklebung erfolgt dann, wenn die in der Umgebungsluft gemessene Konzentration des Markergases über einem gewissen Grenzwert liegt. Kommt das Markergas in der Umgebungsluft nicht vor, so kann dieser Grenzwert bei einer Konzentration von 0% oder wenig darüber liegen. Ist das Markergas auch ein Bestandteil der Umgebungsluft, kann auf einen Schaden geschlossen werden, wenn sich diese Konzentration relativ um 5%, 10%, 15% oder mehr erhöht. Die Bestimmung des Schadens kann durch die oben beschriebene Steuerungseinrichtung erfolgen.

Es ist bevorzugt, dass die Konzentration des Markergases an mehreren Stellen mittels mehrerer Gasdetektoren zeitabhängig detektiert wird, wobei der Ort des Schadens in der Verklebung durch die zeitliche Abfolge, wie die Konzentration des Markergases an den Gasdetektoren steigt, bestimmt wird.

Es ist bevorzugt, dass verschiedene Markergase für verschiedene Bauteilvorrichtungen verwendet werden.

Es ist auch möglich, dass für verschiedene Verklebungen einer Bauteilvorrichtung verschiedene Markergase verwendet werden. Dies soll bedeuten, dass bei der Markersubstanzeinrichtung verschiedene Markergase vorgesehen sind. Dies bietet den Vorteil, gerade in Kombination mit mehreren Gasdetektoren, welche jeweils für die Detektion unterschiedlicher Markergase ausgebildet sind, dass verschiedene Verklebungen gleichzeitig überwacht werden können und dabei diese Verklebung anhand des Markergases bestimmt werden kann.

Es ist bevorzugt, dass die Bauteilvorrichtung in einem Raum angeordnet ist, wobei die Präsenz des Markergases an einer Stelle detektiert wird, an der ein Luftaustausch zwischen dem Raum und dessen Außenumgebung erfolgt.

Der Raum kann beispielsweise eine Kabine oder ein Frachtraum des Luftfahrzeugs sein. Alternativ kann der Raum auch das Innere eines Luftfahrzeugs darstellen. In einer weiteren Ausführungsform kann der Gasdetektor in Be- und Entlüftungselemente des Luftfahrzeugs, beispielsweise in dessen Rumpf, aufgenommen sein, was ein hybrides Be- und Entlüftungsdetektionselement darstellen kann. Durch die Anordnung eines Gasdetektors an einer Stelle, in der ein Austausch der Umgebungsluft zwischen dem Raum und der Umgebung des Raums, beispielsweise dem eines Luftfahrzeugs, angeordnet wird, führt dazu, dass die das Markergas enthaltene Luft an diesem Gasdetektor vorbeiströmt. Auf diese Weise kann besonders einfach erreicht werden, dass mittels eines Gasdetektors ein großer Raum überwacht werden kann, da die Wahrscheinlichkeit minimiert wird, dass der Gasdetektor so angeordnet ist, dass das Markergas nicht zu dem Gasdetektor gelangt.

Bevorzugte Ausführungsformen der Erfindung werden nun anhand der beigefügten, schematischen und nicht maßstabsgerechten Zeichnungen exemplarisch erörtert. Darin zeigen:
- Fig. 1: einen Querschnitt durch eine Bauteilvorrichtung gemäß einer ersten Ausführungsform mit einer unzerstörten Verklebung;
- Fig. 2: einen Querschnitt durch die Bauteilvorrichtung aus Fig. 1 mit einem Schaden an der Verklebung;
- Fig. 3: einen Querschnitt durch eine Bauteilvorrichtung gemäß einer zweiten Ausführungsform;
- Fig. 4: einen Querschnitt durch eine Bauteilvorrichtung gemäß einer dritten Ausführungsform;
- Fig. 5: einen Querschnitt durch eine Bauteilvorrichtung mit einem zugeordneten Belastungsprofil; und
- Fig. 6: eine Draufsicht auf einen Flüssigkeitssensor der Bauteilvorrichtung gemäß Fig. 1.

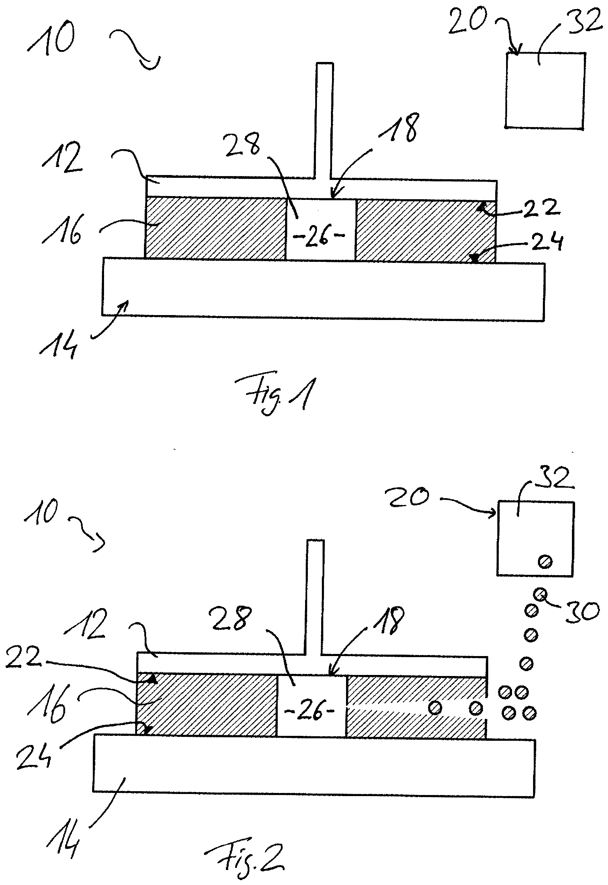

Fig. 1 zeigt eine Bauteilvorrichtung 10, welche ein erstes Bauteilelement 12, ein zweites Bauteilelement 14, eine Verklebung 16, eine Markersubstanzeinrichtung 18 und eine Detektoreinrichtung 20 umfasst. Die Bauteilvorrichtung 10 bildet ein primäres Stützbauteil eines Luftfahrzeugs.

Das erste Bauelement 12 ist als Stringer oder Pfette ausgebildet, während das zweite Bauteilelement 14 einen Ausschnitt aus einer Außenhaut eines Luftfahrzeugs darstellt. Das erste Bauteilelement 12 und das zweite Bauteilelement 14 sind durch eine adhäsive Verklebung 16 miteinander verbunden, welche in den Figuren vergrößert dargestellt ist. Die Verklebung 16 ist zwischen einer ersten Kontaktfläche 22 des ersten Bauteilelements 12 und einer zweiten Kontaktfläche 24 des zweiten Bauteilelements 14 vorgesehen und verbindet diese beiden Kontaktflächen 22 und 24.

In der Verklebung 16 ist ein Hohlraum 26 vorgesehen, welcher von der Verklebung 16, dem ersten Bauteilelement 12 und dem zweiten Bauteilelement 14 hermetisch (gasdicht) von der Umgebung der Bauteilvorrichtung 10 abgeschlossen ist. In diesem Hohlraum 26 ist ein Markermaterial 28 der Markersubstanzeinrichtung 18 vorgesehen. Das Markermaterial 28 ist in der gezeigten Ausführungsform ein Feststoff, welcher bei Kontakt mit der Umgebungsluft, insbesondere dessen Sauerstoff, chemisch unter Generierung eines Markergases 30 reagiert. Das Markermaterial 28 kann jedoch auch das Markergas 30 selbst, das kondensierte Markergas 30, sowie ein Reaktionsflüssigkeit, die unter Bildung des Markergases 30 chemisch mit der Umgebungsluft reagiert, oder ein Reaktionsgas, das unter Bildung des Markergases 30 chemisch mit der Umgebungsluft reagiert, sein.

Die Detektoreinrichtung 20 umfasst in der dargestellten Ausführungsform einen Gasdetektor 32, der beabstandet zu dem ersten Bauteilelement 12, dem zweiten Bauteilelement 14 und der Verklebung 16 angeordnet ist. Der Gasdetektor 32 kann die Konzentration des Markergases 30 in der Umgebungsluft bestimmen und ist als Halbleiter-Detektor ausgebildet. Der Gasdetektor 32 in Be- und Entlüftungselemente des Luftfahrzeugs, beispielsweise in dessen Rumpf, aufgenommen sein, was ein hybrides Be- und Entlüftungsdetektionselement darstellen kann.

Die Detektoreinrichtung 20 ist drahtlos mit einer in den Figuren nicht gezeigten Steuerungseinrichtung verbunden, welche die Messergebnisse der Detektoreinrichtung 20 auswertet. Die Steuerungseinrichtung ist in diesem Ausführungsbeispiel ein Computersystem des Luftfahrzeugs. Die Steuerungseinrichtung gibt eine Benachrichtigung oder einen Alarm aus, wenn durch die Änderung der Konzentration des Markergases 30 auf einen Schaden in der Verklebung 16 geschlossen wird, wie dies im Folgenden darstellt wird.

Im Falle eines Schadens in der Verklebung 16, welche in Fig. 2 durch einen Riss dargestellt ist, reagiert das Markermaterial 28 mit der Umgebungsluft und setzt Markergas 30 frei. Die Konzentration des Markergases 30 wird mit Hilfe des Gasdetektors 32 gemessen. Steigt die Konzentration des Markergases 30 in der Umgebungsluft über einen bestimmten Grenzwert, wird darauf geschlossen, dass ein Schaden in der Verklebung 16 vorliegt. In der dargestellten Ausführungsform ist das Markergas 30 ein Gas, das in der Umgebungsluft nicht vorkommt, so dass auf einen Schaden in der Verklebung 16 geschlossen wird, wenn der Gasdetektor 32 die Präsenz des Markergases 30 in der Umgebungsluft detektiert; der vorbestimmte Grenzwert für die Konzentration des Markergases 30 in der Umgebungsluft ist demnach 0%.

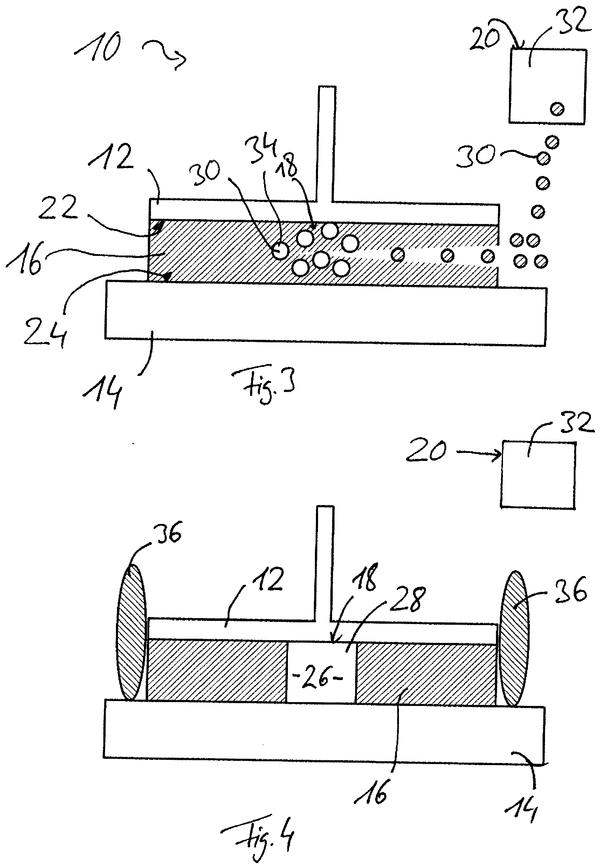

Fig. 3 zeigt eine weitere Ausführungsform der Bauteilvorrichtung 10. Die Bauteilvorrichtung 10 gemäß Fig. 3 stimmt mit der Bauteilvorrichtung 10 gemäß Fig. 1 bis auf die folgenden Unterschiede überein.

Die Markersubstanzeinrichtung 18 umfasst in der in Fig. 3 gezeigten Ausführungsform mehrere Vesikel 34, welche mit dem Markergas 30 gefüllt sind. Die Vesikel 34 haben eine Hülle, die beim Kontakt mit dem Sauerstoff der Umgebungsluft degenerieren und so das Markergas 30 freisetzen. Die Vesikel 34 sind in der gezeigten Ausführungsform vollständig von der Verklebung 16 umschlossen und in der Mitte der Verklebung 16 angeordnet, so dass bei einer unzerstörten Verklebung die Vesikel 34 nicht mit der Umgebungsluft in Kontakt treten. In Fig. 3 ist ein Schaden in der Verklebung 16 in Form eines Risses dargestellt, so dass die Vesikel 34 mit der Umgebungsluft in Kontakt treten, die Vesikel 34 zerstört werden und das Markergas 30 freigesetzt wird. Das Markergas 30 wird, wie zuvor erläutert, von dem Gasdetektor 32 detektiert.

Fig. 4 zeigt eine dritte Ausführungsform der Bauteilvorrichtung 10. Die in Fig. 4 dargestellte Ausführungsform der Bauteilvorrichtung 10 stimmt mit der Bauteilvorrichtung 10 gemäß Fig. 1 bis auf die folgenden Unterschiede überein:
Das Markermaterial 28 reagiert in der in Fig. 4 gezeigten Ausführungsform mit Umgebungsluft nicht unter Bildung des Markergases 30, sondern setzt ein Zwischengas frei. Das Zwischengas reagiert mit einem Reagenzmaterial 36 chemisch unter Generierung des Markergases 30. Das Reagenzmaterial 36 ist an einem äußeren Umfangsrand der Verklebung 16 vorgesehen, so dass im Falle einer Beschädigung in der Verklebung 16 das Zwischengas an dem Reagenzmaterial 36 vorbeiströmt, so dass das Zwischengas mit dem Reagenzmaterial 36 chemisch reagieren kann.

Eine weitere Ausführungsform, die nicht in den Figuren dargestellt ist, stimmt mit der in Fig. 4 gezeigten Ausführungsform überein, wobei kein Markermaterial 28 sondern Vesikel 30 als Teil der Markersubstanzeinrichtung 18 vorgesehen sind. Das zweite Reaktionsmaterial, das bei Kontakt mit der Umgebungsluft das Zwischengas freisetzt, ist in den Vesikeln 30 vorgesehen.

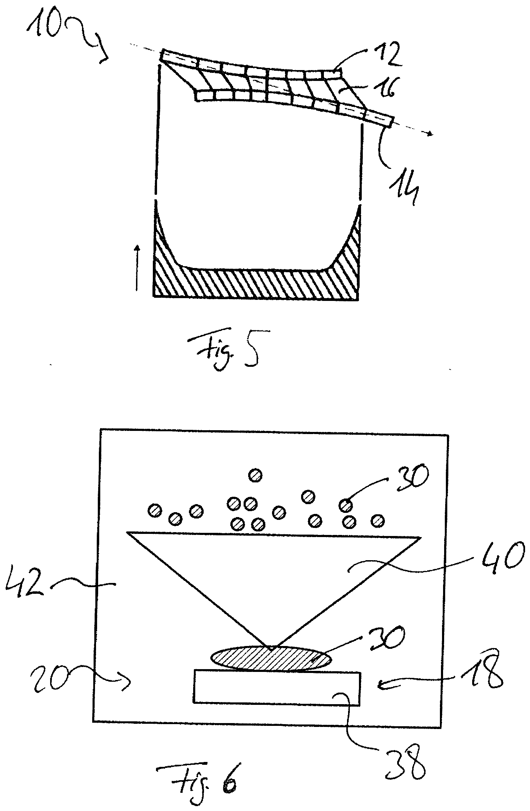

Fig. 5 zeigt schematisch die Bauteilvorrichtung 10 gemäß Fig. 3 in einem belasteten Zustand, wobei die Belastung entlang des Pfeiles erfolgt. Die Belastungsspitzen sind unterhalb der Bauteilvorrichtung 10 schematisch dargestellt. Bei einer derartigen Belastung zeigt sich, dass die Belastung in der Mitte der Verklebung 16 gering ist. Werden nun an dieser Stelle die Vesikel 34 angeordnet, so werden diese selbst bei einer Belastung der Bauteilvorrichtung 10 nicht zerstört. Eine Zerstörung der Vesikel 34 deutet im Umkehrschluss dann auf eine Beschädigung in der Verklebung 16 hin. Daher ist die Mitte der Verbindung der bevorzugte Ort für die Anordnung der Vesikel 34, aber auch des Markermaterials 28.

Fig. 6 zeigt einen Flüssigkeitsdetektor 38 der Detektoreinrichtung 20. Der Flüssigkeitsdetektor 38 ist ausgebildet, kondensiertes Markergas 30 zu detektieren. Dazu ist dem Flüssigkeitsdetektor 38 ein Trichter 40 beigeordnet, der das kondensierte Markergas 30 sammelt und auf den Flüssigkeitsdetektor 38 leitet. Der Flüssigkeitsdetektor 38 und der Trichter 40 sind beispielsweise an einer Wand 42 des Luftfahrzeugs befestigt, welche kühler als die Umgebung ist, so dass dort eine erhöhte Kondensation des Markergases 30 stattfindet. Mit Hilfe des Flüssigkeitsdetektors 38 lassen sich auch geringe Konzentrationen des Markergases 30 bestimmen, da durch die Kondensation eine Kumulation des Markergases 30 erfolgt.

In einer weiteren Ausführungsform kann der Flüssigkeitsdetektor 38 in vorhandene Drainageelemente des Luftfahrzeugs integriert sein kann.

Die Funktionsweise der Bauteilvorrichtung 10 wird im Folgenden beschrieben.

Das Markermaterial 28 oder die Vesikel 34 werden in der Verklebung 16 derart eingeschlossen, dass sie gasdicht von der Umgebungsluft angeschlossen sind. Im Falle einer Beschädigung der Verklebung 16, beispielsweise durch einen Riss, wird eine Gasverbindung zwischen den Vesikeln 34 oder dem Markermaterial 28 und der Umgebungsluft hergestellt. Auf diese Weise wird Markergas 30 freigesetzt, welches von dem Gasdetektor 32 oder dem Flüssigkeitsdetektor 38 detektiert wird. Steigt die Konzentration des Markergases 30 über einen gewissen Grenzwert, deutet dies darauf hin, dass eine Beschädigung der Verklebung 16 vorliegt.

Eine Lokalisierung der Beschädigung der Verklebung 16 erfolgt dadurch, dass mehrere Gasdetektoren 32 vorgesehen sind. Je nachdem, an welchem Gasdetektor 32 das Markergas 30 zuerst gemessen wird oder wo die Konzentration des Markergases 30 in der Umgebungsluft am höchsten ist, kann daraus auf die Stelle der Beschädigung geschlossen werden.

### Bezugszeichenliste:

- 10: Bauteilvorrichtung
- 12: erstes Bauteilelement
- 14: zweites Bauteilelement
- 16: Verklebung
- 18: Markersubstanzeinrichtung
- 20: Detektoreinrichtung
- 22: erste Kontaktfläche
- 24: zweite Kontaktfläche
- 26: Hohlraum
- 28: Markermaterial
- 30: Markergas
- 32: Gasdetektor
- 34: Vesikel
- 36: Reagenzmaterial
- 38: Flüssigkeitsdetektor
- 40: Trichter
- 42: Wand

## Patentansprüche

1. Bauteilvorrichtung (10), insbesondere für ein primäres Stützbauteil eines Luftfahrzeugs, umfassend
ein erstes Bauteilelement (12),
ein zweites Bauteilelement (14),
eine Verklebung (16), welche eine Verbindung zwischen dem ersten Bauteilelement (12) und dem zweiten Bauteilelement (14) bereitstellt,
eine Markersubstanzeinrichtung (18), welche ausgebildet ist, bei Kontakt mit Umgebungsluft ein flüchtiges Markergas (30) an die Umgebung abzugeben, und welche bei einer unzerstörten Verklebung (16) durch die Verklebung (16), das erste Bauelement (12) und/oder das zweite Bauelement (14) hermetisch von der Umgebungsluft abgeschlossen ist, und
eine Detektoreinrichtung (20), welche ausgebildet ist, das von der Markersubstanzeinrichtung (18) abgegebene Markergas (30) zu detektieren.

2. Bauteilvorrichtung (10) nach Anspruch 1,
**dadurch gekennzeichnet,**
**dass** die Markersubstanzeinrichtung (18) wenigstens ein Vesikel (34) umfasst, das mit dem Markergas (30) und/oder mit einer Flüssigkeit aus kondensiertem Markergas (30) gefüllt ist.

3. Bauteilvorrichtung (10) nach Anspruch 1 oder 2,
**dadurch gekennzeichnet,**
**dass** die Markersubstanzeinrichtung (18) wenigstens ein Vesikel (34) umfasst, das mit einem Reaktionsgas und/oder mit einer Flüssigkeit aus kondensiertem Reaktionsgas gefüllt ist, wobei das Reaktionsgas in Kontakt mit der Umgebungsluft, insbesondere mit Sauerstoff, unter Generierung des Markergases (30) chemisch reagiert.

4. Bauteilvorrichtung (10) nach Anspruch 2 oder 3,
**dadurch gekennzeichnet,**
**dass** das Vesikel (34) eine Hülle aufweist, welche bei Kontakt mit der Umgebungsluft und/oder durch Krafteinwirkung zerstörbar ist.

5. Bauteilvorrichtung (10) nach einem der voranstehenden Ansprüche,
**dadurch gekennzeichnet,**
**dass** die Markersubstanzeinrichtung (18) Markermaterial (28) umfasst, welches durch die Verklebung (16), das erste Bauelement (12) und/oder das zweite Bauelement (14) hermetisch von der Umgebungsluft getrennt ist.

6. Bauteilvorrichtung (10) nach Anspruch 5,
**dadurch gekennzeichnet,**
**dass** das Markermaterial (28) das Markergas (30), eine Flüssigkeit aus kondensiertem Markergas (30), ein Reaktionsfeststoff, welcher bei Kontakt mit Umgebungsluft unter Generierung des Markergases (30) chemisch reagiert, und/oder eine Reaktionsflüssigkeit, welche bei Kontakt mit Umgebungsluft unter Generierung des Markergases (30) chemisch reagiert, umfasst.

7. Bauteilvorrichtung (10) nach einem der voranstehenden Ansprüche,
**dadurch gekennzeichnet,**
**dass** die Verklebung (16) mit der Umgebungsluft über eine Außenfläche in Verbindung steht, wobei entlang der Außenfläche ein Reagenzmaterial (36) vorgesehen ist, wobei das Markermaterial (28) und/oder das Vesikel (34) ein zweites Reaktionsmaterial umfasst, das bei Kontakt mit der Umgebungsluft ein Zwischengas freisetzt, welches chemisch mit dem Reagenzmaterial (36) unter Generierung des Markergases (30) reagiert.

8. Bauteilvorrichtung (10) nach einem der voranstehenden Ansprüche,
**dadurch gekennzeichnet,**
**dass** die Detektoreinrichtung (20) wenigstens zwei Gasdetektoren (32) umfasst, welche jeweils ausgebildet sind, das Markergas (30) zu detektieren, wobei vorzugsweise die Gasdetektoren (32) jeweils ausgebildet sind, eine Bewegungsrichtung der Umgebungsluft zu messen.

9. Bauteilvorrichtung (10) nach einem der voranstehenden Ansprüche,
**dadurch gekennzeichnet,**
**dass** die Detektoreinrichtung (20) einen Flüssigkeitsdetektor (38) aufweist, welcher ausgebildet ist, das kondensierte Markergas (30) zu detektieren.

10. Verfahren zum Detektieren eines Schadens einer Verklebung (16) bei einer Bauteilvorrichtung (10), insbesondere für ein primäres Stützbauteil eines Luftfahrzeugs, umfassend die Schritte:
hermetisches Abschließen einer Markersubstanzeinrichtung (18) von der Umgebungsluft durch die Verklebung (16), ein erstes Bauelement (12) der Bauteilvorrichtung (10) und/oder ein zweites Bauelement (14) der Bauteilvorrichtung (10), wobei die Markersubstanzeinrichtung (18) bei Kontakt mit Umgebungsluft ein flüchtiges Markergas (30) an die Umgebung angibt,
Detektieren des Markergases (30) in der Umgebungsluft und
Bestimmen eines Schadens, wenn die Konzentration des Markergases (30) in der Umgebungsluft über einem vorgegebenen Grenzwert liegt.

11. Verfahren nach Anspruch 10,
**dadurch gekennzeichnet,**
**dass** die Konzentration des Markergases (30) an mehreren Stellen mittels mehrerer Gasdetektoren (32) zeitabhängig detektiert wird, wobei der Ort des Schadens in der Verklebung (16) durch die zeitliche Abfolge, wie die Konzentration des Markergases (30) an den Gasdetektoren (32) steigt, bestimmt wird.

12. Verfahren nach Anspruch 10 oder 11,
**dadurch gekennzeichnet,**
**dass** verschiedene Markergase (30) für verschiedene Bauteilvorrichtungen (10) verwendet werden.

13. Verfahren nach einem der Ansprüche 10 bis 12,
**dadurch gekennzeichnet,**
**dass** die Bauteilvorrichtung (10) in einem Raum angeordnet ist, wobei die Präsenz des Markergases (30) an einer Stelle detektiert wird, an der ein Luftaustausch zwischen dem Raum und dessen Außenumgebung erfolgt.

## Claims

1. Component apparatus (10), in particular for a primary supporting component of an aircraft, comprising
a first component element (12),
a second component element (14),
an adhesive bond (16) which provides a connection between the first component element (12) and the second component element (14),
a marker substance device (18) which is configured to output a volatile marker gas (30) to the surroundings in the case of contact with ambient air, and which, in the case of an intact adhesive bond (16), is closed off hermetically from the ambient air by way of the adhesive bond (16), the first module (12) and/or the second module (14), and
a detector device (20) which is configured to detect the marker gas (30) which is output by the marker substance device (18).

2. Component apparatus (10) according to Claim 1,
**characterized**
**in that** the marker substance device (18) comprises at least one vesicle (34) which is filled with the marker gas (30) and/or with a liquid consisting of condensed marker gas (30).

3. Component apparatus (10) according to Claim 1 or 2,
**characterized**
**in that** the marker substance device (18) comprises at least one vesicle (34) which is filled with a reaction gas and/or with a liquid consisting of condensed reaction gas, the reaction gas reacting chemically in contact with the ambient air, in particular with oxygen, with the generation of the marker gas (30).

4. Component apparatus (10) according to Claim 2 or 3,
**characterized**
**in that** the vesicle (34) has a shell which can be destroyed in the case of contact with the ambient air and/or by way of the action of force.

5. Component apparatus (10) according to one of the preceding claims,
**characterized**
**in that** the marker substance device (18) comprises marker material (28) which is separated hermetically from the ambient air by way of the adhesive bond (16), the first module (12) and/or the second module (14).

6. Component apparatus (10) according to Claim 5,
**characterized**
**in that** the marker material (28) comprises the marker gas (30), a liquid consisting of condensed marker gas (30), a reaction solid which reacts chemically in the case of contact with ambient air with the generation of the marker gas (30), and/or a reaction liquid which reacts chemically in the case of contact with ambient air with the generation of the marker gas (30).

7. Component apparatus (10) according to one of the preceding claims,
**characterized**
**in that** the adhesive bond (16) is connected via an outer face to the ambient air, a reagent material (36) being provided along the outer face, the marker material (28) and/or the vesicle (34) comprising a second reaction material which, in the case of contact with the ambient air, releases an intermediate gas which reacts chemically with the reagent material (36) with the generation of the marker gas (30).

8. Component apparatus (10) according to one of the preceding claims,
**characterized**
**in that** the detector device (20) comprises at least two gas detectors (32) which are configured in each case to detect the marker gas (30), the gas detectors (32) preferably being configured in each case to measure a movement direction of the ambient air.

9. Component apparatus (10) according to one of the preceding claims,
**characterized**
**in that** the detector device (20) has a liquid detector (38) which is configured to detect the condensed marker gas (30).

10. Method for detecting damage of an adhesive bond (16) in the case of a component apparatus (10), in particular for a primary supporting component of an aircraft, comprising the steps:
hermetic closing off of a marker substance device (18) from the ambient air by way of the adhesive bond (16), a first module (12) of the component apparatus (10) and/or a second module (14) of the component apparatus (10), the marker substance device (18) outputting a volatile marker gas (30) to the surroundings in the case of contact with ambient air,
detecting of the marker gas (30) in the ambient air, and
determining of damage if the concentration of the marker gas (30) in the ambient air lies above a predefined limit value.

11. Method according to Claim 10,
**characterized**
**in that** the concentration of the marker gas (30) is detected in a time-dependent manner at a plurality of locations by means of a plurality of gas detectors (32), the location of the damage in the adhesive bond (16) being determined by way of the chronological sequence showing how the concentration of the marker gas (30) at the gas detectors (32) rises.

12. Method according to Claim 10 or 11,
**characterized**
**in that** different marker gases (30) are used for different component apparatuses (10).

13. Method according to one of Claims 10 to 12,
**characterized**
**in that** the component apparatus (10) is arranged in a space, the presence of the marker gas (30) being detected at a location, at which an air exchange takes place between the space and its external surroundings.

## Revendications

1. Dispositif de composant (10), notamment pour un composant support primaire d'un aéronef, comprenant :
un premier élément de composant (12),
un deuxième élément de composant (14),
un collage (16), qui fournit une liaison entre le premier élément de composant (12) et le deuxième élément de composant (14),
un appareil à substance de marquage (18), qui est configuré pour émettre un gaz de marquage volatil (30) dans l'environnement lors du contact avec l'air ambiant, et qui, lorsque le collage (16) n'est pas détruit, est isolé hermétiquement de l'air ambiant par le collage (16), le premier élément (12) et/ou le deuxième élément (14), et
un appareil de détection (20), qui est configuré pour détecter le gaz de marquage (30) émis par l'appareil à substance de marquage (18).

2. Dispositif de composant (10) selon la revendication 1, **caractérisé en ce que** l'appareil à substance de marquage (18) comprend au moins une vésicule (34), qui est remplie avec le gaz de marquage (30) et/ou avec un liquide du gaz de marquage condensé (30) .

3. Dispositif de composant (10) selon la revendication 1 ou 2, **caractérisé en ce que** l'appareil à substance de marquage (18) comprend au moins une vésicule (34), qui est remplie avec un gaz de réaction et/ou avec un liquide du gaz de réaction condensé, le gaz de réaction réagissant chimiquement au contact de l'air ambiant, notamment de l'oxygène, avec génération du gaz de marquage (30).

4. Dispositif de composant (10) selon la revendication 2 ou 3, **caractérisé en ce que** la vésicule (34) comprend une enveloppe, qui peut être détruite au contact de l'air ambiant et/ou par l'action d'une force.

5. Dispositif de composant (10) selon l'une quelconque des revendications précédentes, **caractérisé en ce que** l'appareil à substance de marquage (18) comprend un matériau de marquage (28), qui est séparé hermétiquement de l'air ambiant par le collage (16), le premier élément (12) et/ou le deuxième élément (14).

6. Dispositif de composant (10) selon la revendication 5, **caractérisé en ce que** le matériau de marquage (28) comprend le gaz de marquage (30), un liquide du gaz de marquage condensé (30), un solide de réaction, qui réagit chimiquement au contact de l'air ambiant avec génération du gaz de marquage (30), et/ou un liquide de réaction, qui réagit chimiquement au contact de l'air ambiant avec génération du gaz de marquage (30).

7. Dispositif de composant (10) selon l'une quelconque des revendications précédentes, **caractérisé en ce que** le collage (16) est en contact avec l'air ambiant par le biais d'une surface extérieure, un matériau réactif (36) étant prévu le long de la surface extérieur, le matériau de marquage (28) et/ou la vésicule (34) comprenant un deuxième matériau de réaction, qui libère au contact de l'air ambiant un gaz intermédiaire, qui réagit chimiquement avec le matériau réactif (36) avec génération du gaz de marquage (30).

8. Dispositif de composant (10) selon l'une quelconque des revendications précédentes, **caractérisé en ce que** l'appareil de détection (20) comprend au moins deux détecteurs de gaz (32), qui sont chacun configurés pour détecter le gaz de marquage (30), les détecteurs de gaz (32) étant de préférence chacun configurés pour mesurer une direction de déplacement de l'air ambiant.

9. Dispositif de composant (10) selon l'une quelconque des revendications précédentes, **caractérisé en ce que** l'appareil de détection (20) comprend un détecteur de liquide (38), qui est configuré pour détecter le gaz de marquage condensé (30).

10. Procédé de détection d'un endommagement d'un collage (16) dans un dispositif de composant (10), notamment pour un composant support primaire d'un aéronef, comprenant les étapes suivantes :
l'isolement hermétique d'un appareil à substance de marquage (18) de l'air ambiant par le collage (16), un premier élément (12) du dispositif de composant (10) et/ou un deuxième élément (14) du dispositif de composant (10), l'appareil à substance de marquage (18) émettant un gaz de marquage volatil (30) dans l'environnement au contact de l'air ambiant,
la détection du gaz de marquage (30) dans l'air ambiante, et
la détermination d'un endommagement lorsque la concentration du gaz de marquage (30) dans l'air ambiant est située au-dessus d'une valeur limite prédéterminée.

11. Procédé selon la revendication 10, **caractérisé en ce que** la concentration du gaz de marquage (30) est détectée en fonction du temps à plusieurs emplacements au moyen de plusieurs détecteurs de gaz (32), le site de l'endommagement dans le collage (16) étant déterminé par la séquence temporelle selon laquelle la concentration du gaz de marquage (30) augmente au niveau des détecteurs de gaz (32).

12. Procédé selon la revendication 10 ou 11, **caractérisé en ce que** différents gaz de marquage (30) sont utilisés pour différents dispositifs de composant (10) .

13. Procédé selon l'une quelconque des revendications 10 à 12, **caractérisé en ce que** le dispositif de composant (10) est agencé dans une chambre, la présence du gaz de marquage (30) étant détectée à un emplacement auquel un échange d'air entre la chambre et son environnement extérieur a lieu.
